# EUROPEAN PATENT APPLICATION

(11) **EP 2 945 420 A1**
(43) Date of publication of application: **18.11.2015**
(21) Application number: 15165488.6
(22) Date of filing: 28.04.2015
(51) Int. Cl.: H04W 28/20, H04W 28/22, H04W 72/08

(54) **BSS-WIDE BANDWIDTH RESTRICTION MODES FOR WLAN**

(30) Priority: 15.05.2014 US 201414277997
(71) Applicant: Celeno Communications (Israel) Ltd., 43662 Ra'anana (IL)
(72) Inventor: Hencinski, Oren, Holon (IL)
(74) Representative: Beck Greener

(57) **Abstract**

A method includes, in an Access Point (AP) that communicates with one or more wireless communication stations (STAs) in accordance with a communication protocol that permits the STAs to transmit to the AP at bandwidths selected by the STAs without coordination with the AP, evaluating a condition relating to signal quality of at least one of the STAs. A maximum bandwidth is chosen based on the evaluated condition, and the STAs are instructed to transmit to the AP at no more than the chosen maximum bandwidth.

## Description

The present invention relates generally to wireless communication, and particularly to methods and systems for setting of transmission bandwidth in Wireless Local-Area Networks (WLANs).

A Wireless Local-Area Network (WLAN) typically comprises one or more Access Points (APs) that communicate with stations (STAs). WLAN communication protocols are specified, for example, in the IEEE 802.11 family of standards, such as in the 802.11n-2009 standard entitled "IEEE Standard for Information technology - Local and metropolitan area networks - Specific requirements - Part 11: Wireless LAN Medium Access Control (MAC) and Physical Layer (PHY) Specifications Amendment 5: Enhancements for Higher Throughput," 2009; and in the 802.11ac-2013 standard entitled "IEEE Standard for Information technology - Local and metropolitan area networks - Specific requirements - Part 11: Wireless LAN Medium Access Control (MAC) and Physical Layer (PHY) Specifications Amendment 4: Enhancements for Very High Throughput for Operation in Bands below 6 GHz," 2013, which are both incorporated herein by reference. WLANs are also commonly referred to as Wi-Fi networks.

An embodiment of the present invention that is described herein provides a method including, in an Access Point (AP) that communicates with one or more wireless communication stations (STAs) in accordance with a communication protocol that permits the STAs to transmit to the AP at bandwidths selected by the STAs without coordination with the AP, evaluating a condition relating to signal quality of at least one of the STAs. A maximum bandwidth is chosen based on the evaluated condition, and the STAs are instructed to transmit to the AP at no more than the chosen maximum bandwidth.

In some embodiments, evaluating the condition and choosing the maximum bandwidth include continuously re-evaluating the condition and adapting the maximum bandwidth based on the re-evaluated condition. In an embodiment, the STAs are associated with a given Basic Service Set (BSS), and instructing the STAs includes restricting transmission bandwidth of the entire given BSS to the chosen maximum bandwidth.

In a disclosed embodiment, choosing the maximum bandwidth includes setting the maximum bandwidth such that all the STAs have link budgets that are within coverage of the AP. In another embodiment, choosing the maximum bandwidth includes setting the maximum bandwidth to maximize a throughput of an STA having a best link budget among the STAs. In yet another embodiment, evaluating the condition includes measuring interfering signals received at the AP, and choosing the maximum bandwidth includes selecting a bandwidth that excludes the interfering signals.

In still another embodiment, evaluating the condition includes assessing the condition only for STAs that are actively exchanging traffic via the AP, and not for STAs that are associated with the AP but are not actively exchanging traffic. In an embodiment, evaluating the condition includes assessing the condition only for STAs that exchange via the AP at least a predefined traffic throughput, and not for STAs that are associated with the AP but exchange less than the predefined traffic throughput. Evaluating the condition may include assessing at least one signal quality measure selected from a group of measures consisting of received signal strength, signal-to-noise ratio, error rate, and modulation and coding scheme (MCS).

There is additionally provided, in accordance with an embodiment of the present invention, an Access Point (AP) including a transceiver and a processor. The transceiver is configured to communicate with one or more wireless communication stations (STAs) in accordance with a communication protocol that permits the STAs to transmit to the AP at bandwidths selected by the STAs without coordination with the AP. The processor is configured to evaluate a condition relating to signal quality of at least one of the STAs, to choose a maximum bandwidth based on the evaluated condition, and to instruct the STAs to transmit to the AP at no more than the chosen maximum bandwidth.

According to a first aspect of the present invention, there is provided a method for communication, comprising: in an Access Point (AP), which communicates with one or more wireless communication stations (STAs) in accordance with a communication protocol that permits the STAs to transmit to the AP at bandwidths selected autonomously by the STAs, evaluating a condition relating to signal quality of at least one of the STAs; and choosing a maximum bandwidth based on the evaluated condition, and instructing the STAs to transmit to the AP at no more than the chosen maximum bandwidth.

In an embodiment, evaluating the condition and choosing the maximum bandwidth comprise continuously re-evaluating the condition and adapting the maximum bandwidth based on the re-evaluated condition.

In an embodiment, the STAs are associated with a given Basic Service Set (BSS), and wherein instructing the STAs comprises restricting transmission bandwidth of the entire given BSS to the chosen maximum bandwidth.

In an embodiment, choosing the maximum bandwidth comprises setting the maximum bandwidth such that all the STAs have link budgets that are within coverage of the AP.

In an embodiment, choosing the maximum bandwidth comprises setting the maximum bandwidth to maximize a throughput of an STA having a best link budget among the STAs.

In an embodiment, evaluating the condition comprises measuring interfering signals received at the AP, and wherein choosing the maximum bandwidth comprises selecting a bandwidth that excludes the interfering signals.

In an embodiment, evaluating the condition comprises assessing the condition only for STAs that are actively exchanging traffic via the AP, and not for STAs that are associated with the AP but are not actively exchanging traffic.

In an embodiment, evaluating the condition comprises assessing the condition only for STAs that exchange via the AP at least a predefined traffic throughput, and not for STAs that are associated with the AP but exchange less than the predefined traffic throughput.

In an embodiment, evaluating the condition comprises assessing at least one signal quality measure selected from a group of measures consisting of received signal strength, signal-to-noise ratio, error rate, and modulation and coding scheme (MCS).

According to a second aspect of the present invention, there is provided an Access Point (AP), comprising: a transceiver, which is configured to communicate with one or more wireless communication stations (STAs) in accordance with a communication protocol that permits the STAs to transmit to the AP at bandwidths selected autonomously by the STAs; and a processor, which is configured to evaluate a condition relating to signal quality of at least one of the STAs, to choose a maximum bandwidth based on the evaluated condition, and to instruct the STAs to transmit to the AP at no more than the chosen maximum bandwidth.

In an embodiment, the processor is configured to continuously re-evaluate the condition and adapt the maximum bandwidth based on the re-evaluated condition.

In an embodiment, the STAs are associated with a given Basic Service Set (BSS), and wherein the processor is configured to restrict transmission bandwidth of the entire given BSS to the chosen maximum bandwidth.

In an embodiment, the processor is configured to set the maximum bandwidth such that all the STAs have link budgets that are within coverage of the AP.

In an embodiment, the processor is configured to set the maximum bandwidth to maximize a throughput of an STA having a best link budget among the STAs.

In an embodiment, the processor is configured to measure interfering signals received at the AP, and to choose the maximum bandwidth by selecting a bandwidth that excludes the interfering signals.

The present invention will be more fully understood from the following detailed description of the embodiments thereof, taken together with the drawings in which:
Fig. 1 is a block diagram that schematically illustrates a Wireless Local-Area Network (WLAN), in accordance with an embodiment of the present invention; and
Fig. 2 is a flow chart that schematically illustrates a method for BSS-wide bandwidth restriction, in accordance with an embodiment of the present invention.

### OVERVIEW

Some conventional WLAN communication protocols, such as the IEEE 802.11 standards, permit WLAN stations (STAs) to select their transmission bandwidths autonomously, without coordination with the Access Point (AP). This feature is problematic in some scenarios. For example, if a STA that is distant from the AP selects a wide transmission bandwidth, it may be received by the AP with inadequate signal quality.

Embodiments of the present invention that are described herein provide improved methods and systems for setting transmission bandwidths in a WLAN. In some embodiments, the AP restricts the choice of STA transmission bandwidths to some maximum bandwidth. The AP sets the maximum bandwidth based on the received signal quality of one or more of the STAs, e.g., so as to meet some link-budget or Quality-of-Service (QoS) criterion. Various possible measures for the received signal quality are described. The bandwidth restriction is typically applied across the entire set of STAs served by the AP, e.g., over an entire Basic Service Set (BSS).

Using the disclosed bandwidth restriction mechanism, the AP is able to enforce various operational modes, such as a maximum-throughput mode in which the AP maximizes the throughput of near STAs (possibly at the expense of distant STAs), or a QoS mode in which the AP provides high QoS to all STAs (possibly at the expense of lower throughput). In another operational mode, the AP measures interfering signals affecting its receiver, and chooses the maximum bandwidth for the BSS so as to best exclude the interfering signals. Several examples of such modes and their management are given herein.

The disclosed techniques give the AP better control over the transmission bandwidths of the STAs, even though the underlying protocol permits the STAs to select their transmission bandwidths autonomously. These techniques overcome problematic scenarios that result in degraded service to STAs, and enable the AP to enforce desired operational modes and policies.

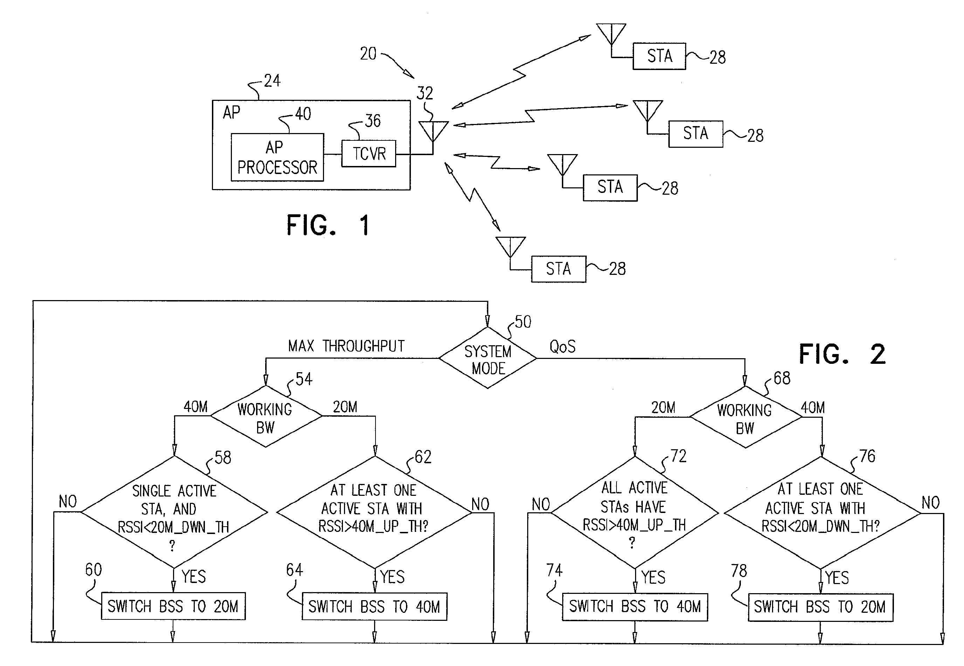

Fig. 1 is a block diagram that schematically illustrates a Wireless Local-Area Network (WLAN) 20, in accordance with an embodiment of the present invention. In the present example, WLAN 20 operates in accordance with an IEEE 802.11 standard, such as IEEE 802.11n or 802.11ac, cited above. Alternatively, WLAN 20 may operate in accordance with any other suitable WLAN standard or protocol.

In the embodiment of Fig. 1, WLAN 20 comprises an Access Point (AP) 24 that communicates with one or more stations (STAs) 28. Typically, AP 24 and STAs 28 are associated with a certain Basic Service Set (BSS). In some embodiments, however, a single AP may support multiple BSSs.

AP 24 comprises an antenna 32, a transceiver (transmitter-receiver, TCVR) 36 for transmitting and receiving wireless signals to and from the STAs via antenna 32, and a AP processor 40 that carries out the various processing functions of the AP. In particular, processor 40 sets the operating bandwidth for WLAN 20 using methods that are described in detail below.

The configurations of WLAN 20 and AP 24 shown in Fig. 1 are example configurations, which are chosen purely for the sake of conceptual clarity. In alternative embodiments, any other suitable system and/or AP configuration can be used. The different elements of AP 24, e.g., processor 40, may be implemented using suitable hardware, such as in an Application-Specific Integrated Circuit (ASIC) or Field-Programmable Gate Array (FPGA). In some embodiments, some AP elements, e.g., processor 40, can be implemented using software, or using a combination of hardware and software elements. AP elements that are not mandatory for understanding of the disclosed techniques have been omitted from the figure for the sake of clarity.

In some embodiments, processor 40 comprises a general-purpose processor, which is programmed in software to carry out the functions described herein. The software may be downloaded to the processor in electronic form, over a network, for example, or it may, alternatively or additionally, be provided and/or stored on non-transitory tangible media, such as magnetic, optical, or electronic memory.

### BSS-WIDE AP-CONTROLLED BANDWIDTH RESTRICTION

In some embodiments, AP 24 and each STA 28 support various transmission bandwidths. The supported bandwidths may depend, for example, on the applicable WLAN standard and on the individual capabilities of the AP and STAs. The IEEE 802.11n standard, for example, specifies transmission bandwidths of 20MHz and 40 MHz, whereas the IEEE 802.11ac standard specifies transmission bandwidths of 20, 40, 80 and 160MHz.

In a conventional IEEE 802.11-compliant WLAN, the AP has little control over the uplink transmission bandwidths of the STAs. In other words, each STA has the freedom to choose the transmission bandwidth for transmitting uplink transmissions to the AP. As a result, a STA having a poor link budget (e.g., because it is far away from the AP) may choose a transmission bandwidth that is too high for communicating reliably with the AP. Such a scenario may occur, for example, when the STAs attempt to maximize their transmission bandwidths based on Clear Channel Assessment (CCA).

In some embodiments of the present invention, AP 24 limits the transmission bandwidth to be used by STAs 28 to some maximal bandwidth, which is lower than the maximum bandwidth supported by the AP. For example, the AP may limit the STA transmission bandwidths to no more than 20MHz, in order to allow distant STAs to receive service.

Typically, the bandwidth restriction imposed by AP 24 is performed across an entire BSS, i.e., applied to all the STAs in a given BSS managed by the AP. The AP typically decides whether (and to what extent) to limit the STA transmission bandwidths depending on Quality-of-Service (QoS) and/or coverage considerations, rather than interference or CCA considerations. For example, the AP may set the maximum bandwidth for the BSS (typically for both uplink and downlink) by evaluating the reception quality of the uplink signals from one or more of the STAs.

AP 24 may restrict the STA transmission bandwidths depending on various kinds of reception quality measures of the received uplink signal. The description that follows refers mainly to Received Signal Strength Indication (RSSI), i.e., the strength with which the uplink signals from the STAs are received at the AP. Alternatively, however, the AP may use other reception quality measures that are indicative of the coverage and/or QoS situation of the STA, such as the Modulation and Coding Scheme (MCS) used, Signal-to-Noise Ratio (SNR), Packet Error Rate (PER) or other error rate, or any other suitable measure or combination of measures.

Having selected the maximum bandwidth, AP 24 may use various methods for instructing the STAs belonging to the given BSS to adhere to the selected maximum bandwidth. In an example embodiment, the AP transmits one or more beacon messages that comprise these instructions.

In some embodiments, AP 24 supports one or more operational modes for managing the STA transmission bandwidths. One example mode is referred to as a maximum throughput mode, in which the AP attempts to maximize the throughput of near STAs, possibly at the expense of reduced service to far STAs. In this mode, the maximum bandwidth is set so as to maximize the throughput of the STA having a best link budget among the STAs. Another example mode is referred to as a QoS mode, in which the AP attempts to provide high QoS to all STAs, including far STAs, possibly at the expense of lower throughput. In this mode, on the other hand, the maximum bandwidth is set such that all the STAs are within coverage of the AP.

In both the QoS and the maximum throughput modes, the maximum transmission bandwidth of the STAs is restricted to some selected maximum bandwidth. Another example mode is an "off" mode, in which bandwidth restriction is disabled, and each STA is free to choose its bandwidth individually.

In some embodiments, AP 24 distinguishes between STAs that are active, i.e., engaged in actual exchange of traffic, and STAs that are merely associated with the AP but are not actively exchanging traffic. In these embodiments, the AP evaluates signal quality only for the active STAs. The motivation behind this mechanism is to avoid degrading the service to active STAs due to unfavorable conditions of inactive STAs. In some embodiments, a STA is considered active only if its traffic throughput exceeds some predefined threshold. In these embodiments, the AP typically does not evaluate signal quality and does not consider a change of mode based on STAs whose traffic volume is below the threshold.

In some embodiments, AP 24 selects the maximum bandwidth to be used by STAs 28 based on interference measurements performed at the AP receiver. This operational mode is useful, for example, when the interference conditions in the vicinity of the AP are considerably different from those in the vicinity of the STA. In such a case, if the STA were to choose its bandwidth based on locally-measured interference, the interference affecting the AP receiver would still cause poor reception quality. The STA has no way of sensing this interference locally.

Thus, in some embodiments, AP 24 measures the interfering signals affecting its receiver, and chooses the maximum bandwidth so as to (at least partially) exclude the frequencies of the interfering signals. The AP then restricts the bandwidth for the entire BSS to the chosen bandwidth. Measurement of interfering signals at the AP can be performed per 20, 40 or 80 MHz channel, for example. As a result, error performance and link budgets between the STAs and the AP improve significantly. This operational mode (bandwidth selection based on AP-side interference) can be used as a standalone mode, or on top of the maximum-throughput and QoS modes.

### EXAMPLE AP OPERATION FLOW

Fig. 2 is a flow chart that schematically illustrates a method for BSS-wide bandwidth restriction, in accordance with an embodiment of the present invention. In the present example, the STAs support two transmission bandwidths - 20MHz and 40MHz - For the sake of clarity. Similar flows can be defined for other supported bandwidths.

The method begins with AP 24 checking the current mode of operation, at a mode checking step 50. If the current mode is the maximum throughput mode, the AP checks whether the currently-used maximum bandwidth is 20MHz or 40MHz, at a bandwidth checking step 54.

In the maximum throughput mode, if step 54 concludes that the current maximum bandwidth is 40MHz, the maximum bandwidth may be reduced to 20MHz if only a single active STA is active, and its RSSI is below a predefined threshold denoted 20M_DWN_TH. The AP checks this condition, at a 20M_DWN_TH checking step 58. If the condition is met, the AP switches the entire BSS to a maximum bandwidth of 20MHz, at a 20M switching step 60. Otherwise, the maximum bandwidth of 40MHz is retained.

If, on the other hand, step 54 concludes that the current maximum bandwidth is 20MHz, the maximum bandwidth should be increased to 40MHz if at least one active STA has an RSSI that is higher than a predefined threshold denoted 40M_UP_TH. The AP checks this condition, at a 40M_UP_TH checking step 62. If the condition is met, the AP switches the entire BSS to a maximum bandwidth of 40MHz, at a 40M switching step 64. Otherwise, the maximum bandwidth of 20MHz is retained.

Going back to step 50 - If the current mode is the QoS mode, the AP again checks whether the currently-used maximum bandwidth is 20MHz or 40MHz, at a bandwidth checking step 68.

In the QoS mode, if step 68 concludes that the current maximum bandwidth is 20MHz, the maximum bandwidth may be increased to 40MHz only if the RSSIs of all active STAs are above the 40M_UP_TH threshold. The AP checks this condition, at a 40M_UP_TH checking step 72. If the condition is met, the AP switches the entire BSS to a maximum bandwidth of 40MHz, at a 40M switching step 74. Otherwise, the maximum bandwidth of 20MHz is retained.

If, on the other hand, step 68 concludes that the current maximum bandwidth is 40MHz, the maximum bandwidth should be reduced to 20MHz if at least one active STA has an RSSI that is lower than the 20M_DWN_TH threshold. The AP checks this condition, at a 20M_DWN_TH checking step 76. If the condition is met, the AP switches the entire BSS to a maximum (typically both uplink and downlink) bandwidth of 20MHz, at a 20M switching step 78. Otherwise, the maximum bandwidth of 40MHz is retained.

The method then loops back to step 50 above, to check for a possible change in operational mode. Typically, the AP monitors the RSSIs of the various STAs over time, in order to be able to evaluate the conditions in steps 58, 62, 72 and 76. A typical monitoring period is on the order of 100-500mS, although any other suitable period can be used.

The flow of Fig. 2 above is depicted purely by way of example. In alternative embodiments, any other suitable flow can be used. For example, when the STAs support 20MHz, 40MHz and 80MHz, the following logic can be used:

### Maximum throughput mode:

- If at least one active STA has RSSI>40M_UP_TH, switch from 20M to 20/40M maximum bandwidth.
- If at least one active STA has RSSI>80M_UP_TH, switch from 20/40M to 20/40/80M maximum bandwidth.
- If there is only one active STA and its RSSI≤40M_DWN_TH, switch from 20/40/80M to 20/40M maximum bandwidth.
- If there is only one active STA and its RSSI≤20M_DWN_TH, switch to 20M maximum bandwidth.

### QoS mode:

- If at least one active STA has RSSI≤40M_DWN_TH, switch from 20/40/80M to 20/40M maximum bandwidth.
- If at least one active STA has RSSI≤20M_DWN_TH, switch to 20M maximum bandwidth.
- If all active STAs have RSSI>40M_UP_TH, use 40M maximum bandwidth.
- If all active STAs have RSSI>80M_UP_TH, use 80M maximum bandwidth.

It will be appreciated that the embodiments described above are cited by way of example, and that the present invention is not limited to what has been particularly shown and described hereinabove. Rather, the scope of the present invention includes both combinations and sub-combinations of the various features described hereinabove, as well as variations and modifications thereof which would occur to persons skilled in the art upon reading the foregoing description and which are not disclosed in the prior art.

## Claims

1. A method for communication, comprising:
in an Access Point (AP), which communicates with one or more wireless communication stations (STAs) in accordance with a communication protocol that permits the STAs to transmit to the AP at bandwidths selected autonomously by the STAs, evaluating a condition relating to signal quality of at least one of the STAs; and
choosing a maximum bandwidth based on the evaluated condition, and instructing the STAs to transmit to the AP at no more than the chosen maximum bandwidth.

2. The method according to claim 1, wherein evaluating the condition and choosing the maximum bandwidth comprise continuously re-evaluating the condition and adapting the maximum bandwidth based on the re-evaluated condition.

3. The method according to any of claims 1 and 2, wherein the STAs are associated with a given Basic Service Set (BSS), and wherein instructing the STAs comprises restricting transmission bandwidth of the entire given BSS to the chosen maximum bandwidth.

4. The method according to any of claims 1 to 3, wherein choosing the maximum bandwidth comprises setting the maximum bandwidth such that all the STAs have link budgets that are within coverage of the AP.

5. The method according to any of claims 1 to 3, wherein choosing the maximum bandwidth comprises setting the maximum bandwidth to maximize a throughput of an STA having a best link budget among the STAs.

6. The method according to any of claims 1 to 5, wherein evaluating the condition comprises measuring interfering signals received at the AP, and wherein choosing the maximum bandwidth comprises selecting a bandwidth that excludes the interfering signals.

7. The method according to any of claims 1 to 5, wherein evaluating the condition comprises assessing the condition only for STAs that are actively exchanging traffic via the AP, and not for STAs that are associated with the AP but are not actively exchanging traffic.

8. The method according to any of claims 1 to 5, wherein evaluating the condition comprises assessing the condition only for STAs that exchange via the AP at least a predefined traffic throughput, and not for STAs that are associated with the AP but exchange less than the predefined traffic throughput.

9. The method according to any of claims 1 to 8, wherein evaluating the condition comprises assessing at least one signal quality measure selected from a group of measures consisting of received signal strength, signal-to-noise ratio, error rate, and modulation and coding scheme (MCS).

10. An Access Point (AP), comprising:
a transceiver, which is configured to communicate with one or more wireless communication stations (STAs) in accordance with a communication protocol that permits the STAs to transmit to the AP at bandwidths selected autonomously by the STAs; and
a processor, which is configured to evaluate a condition relating to signal quality of at least one of the STAs, to choose a maximum bandwidth based on the evaluated condition, and to instruct the STAs to transmit to the AP at no more than the chosen maximum bandwidth.

11. The AP according to claim 10, wherein the processor is configured to continuously re-evaluate the condition and adapt the maximum bandwidth based on the re-evaluated condition.

12. The AP according to any of claims 10 and 11, wherein the STAs are associated with a given Basic Service Set (BSS), and wherein the processor is configured to restrict transmission bandwidth of the entire given BSS to the chosen maximum bandwidth.

13. The AP according to any of claims 10 to 12, wherein the processor is configured to set the maximum bandwidth such that all the STAs have link budgets that are within coverage of the AP.

14. The AP according to any of claims 10 to 12, wherein the processor is configured to set the maximum bandwidth to maximize a throughput of an STA having a best link budget among the STAs.

15. The AP according to any of claims 10 to 14, wherein the processor is configured to measure interfering signals received at the AP, and to choose the maximum bandwidth by selecting a bandwidth that excludes the interfering signals.
